# EUROPÄISCHE PATENTSCHRIFT

(11) **EP 0 944 485 B1**
(45) Veröffentlichungstag und Bekanntmachung des Hinweises auf die Patenterteilung: **08.11.2000**
(21) Anmeldenummer: 97954918.5
(22) Anmeldetag: 16.12.1997
(51) Int. Cl.: B60C 23/04

(54) **VERFAHREN ZUM ERKENNEN, AN WELCHER STELLE EINES MIT EINER REIFENDRUCKKONTROLLEINRICHTUNG AUSGERÜSTETEN FAHRZEUGES SICH EIN BESTIMMTES RAD BEFINDET**
METHOD FOR DETECTING WHERE A GIVEN WHEEL IS LOCATED ON A VEHILCE THAT IS EQUIPPED WITH A WHEEL PRESSURE CHECKING DEVICE
PROCEDE PERMATTANT DE DETECTER A QUAL ENDROIT D'UN VEHICULE EQUIPE D'UNE INSTALLATION DE CONTROLE DE LA PRESSION DES PNEUS SE TROUVE UNE ROUE DONNEE

(30) Priorität: 17.12.1996 DE 19652365
(43) Veröffentlichungstag der Anmeldung: 29.09.1999
(73) Patentinhaber: Beru AG, 71636 Ludwigsburg (DE)
(72) Erfinder: MICHAL, Roland, 75181 Pforzheim (DE); NORMANN, Norbert, 75223 Niefern-Öschelbronn (DE); SCHULZE, Gunter Lothar, 75228 Ispringen (DE)
(74) Vertreter: Twelmeier, Ulrich, Dipl.Phys.
(86) Internationale Anmeldenummer: EP9707049
(87) Internationale Veröffentlichungsnummer: WO9826946

(56) Entgegenhaltungen:
- EP-A- 0 739 761

## Beschreibung

Die Erfindung geht aus von einem Verfahren mit den im Oberbegriff des Anspruchs 1 angegebenen Merkmalen.

Ein solches Verfahren ist aus der WO 93/16891 bekannt. Dort wird eine Kombination aus Druckmeßfühler, Sender und Sendeantenne am Rad mit jeweils zugeordneten Empfangsantennen und einer zentralen Auswerteelektronik an der Karosserie verwendet. Das Problem, das sich bei solchen Reifendrucküberwachungssystemen stellt, ist die eindeutige Zuordnung der Sender zu der jeweiligen Radposition. In der WO 93/16891 wird dieses Problem der Positionserkennung wie folgt gelöst: Die Sender erzeugen ein in vier Abschnitte unterteiltes Signal, bestehend aus Präambel, Identifikationssignal, Meßsignal und Postambel.

Anhand des Identifikationssignals kann die zentrale Auswerteelektronik die Position erkennen. Dafür muß jedoch zunächst eine Initialisierung durchgeführt werden, in deren Verlauf das jeweilige Identifikationssignal, verknüpft mit der jeweiligen Position, von der zentralen Auswerteelektronik abgespeichert wird. Um diese Initialisierung durchzuführen, muß das System in einen sogenannten Paarungsmodus geschaltet werden und dann der Reihe nach jeder einzelne Sender einmal aktiviert werden. Danach wird das System wieder in den Meßmodus gebracht, bis sich die Senderpositionen, z.B. bei einem Radwechsel, ändern. Das heißt aber, daß bei jedem Radwechsel eine entsprechend eingewiesene Person diese Initialisierung durchführen muß. Radwechsel in jeder beliebigen Werkstatt oder zu Hause sind dadurch unter Umständen nicht möglich, bzw. nur auf Kosten der Sicherheit. Die einwandfreie Funktion des Systems kann auf Grund möglicher Bedienungsfehler nicht gewährleistet werden.

In der WO 93/08036 wird das Problem umgangen, indem die Informationen der Druckmeßfühler und der daran angeschlossenen Sendeelektronik nicht mit Hilfe einer zentralen Auswerteelektronik an der Karosserie registriert werden, sondern mit Hilfe eines Fernbedienungselementes. Dieses Fernbedienungselement besitzt eine LCD-Anzeigeeinrichtung, die das Ablesen des Reifendruckes ermöglicht. Will man den Reifendruck ermitteln, so muß man an jedem einzelnen Rad die gewünschte Information mit Hilfe des Fernbedienungselementes abfragen. Dieses Verfahren bietet zwar den Vorteil einer eindeutigen Zuordnung der Meßwerte, ermöglicht jedoch keine Kontrolle des Reifendrucks während der Fahrt.

Nach einem in der älteren, aber nicht vorveröffentlichten DE 196 08 478 A1 offenbarten Vorschlag wird jedem Rad eine eigene, an der Karosserie angebrachte Empfangsantenne zugeordnet; diese Antennen sind über HF-taugliche Leitungen mit einem mehrkanaligen, zentralen HF-Empfänger verbunden. Jede Antenne empfängt Signale von jedem der Räder, jedoch mit unterschiedlichen Intensitäten. Die Senderkennung mit der größten Intensität an einer Empfangsantenne wird dieser Empfangsantenne und damit einer bestimmten Radposition zugeordnet. Dieses Verfahren erlaubt eine sichere automatische Erkennung der Einbaupositionen der dem Fahrzeug eigenen Räder. Nachteilig dabei ist jedoch, daß die richtige Zuordnung der an den Radern vorgesehenen Sender zu den ihnen benachbarten Empfangsantennen innerhalb eines kompletten Reifendruckkontrollsystems einen erheblichen Anteil der Systemkosten verursacht.

Der vorliegenden Erfindung liegt die **Aufgabe** zugrunde, ein Verfahren anzugeben, durch welches während der Fahrt automatisch erkennbar ist, an welcher Stelle eines Fahrzeuges sich ein bestimmtes Rad befindet, wobei der zur Durchführung des Verfahrens erforderliche apparative Aufwand geringer sein soll als beim Stand der Technik.

Erfindungsgemäß wird diese Aufgabe durch die in dem Anspruch 1 aufgeführten Merkmale gelöst. Vorteilhafte Weiterbildungen der Erfindung sind Gegenstand der abhängigen Ansprüche.

Erfindungsgemäß werden Stellen an einem Fahrzeug, an denen sich Räder befinden können, durch ein Bauteil gekennzeichnet, welches mit einer Kennung versenen ist, welche für eben die betreffende Stelle im Fahrzeug ausgewählt wurde. Dieses Bauteil kann z.B. an einem Teil der Radaufhängung oder an einem das Rad teilweise umgebenden Gehäuse (Radhaus oder Kotflügel) angebracht werden und befindet sich dann in der Nachbarschaft eines dort vorgesehenen Rades. Die Kennung des Bauteils wird durch drahtlose Wechselwirkung zwischen dem Bauteil und dem am benachbarten Rad angebrachten Sender abgetastet, auf diese Weise dem Sender mitgeteilt und von diesem an die zentrale Empfangs- und Auswerteschaltung im Fahrzeug gesendet; zweckmäßigerweise wird sie den vom Sender an die zentrale Empfangs- und Auswerteschaltung zu übertragenden Signalen hinzugefügt, welche die Reifendruckmeßwerte enthalten. Die Erfindung erlaubt es, darauf zu verzichten, in der Nachbarschaft jedes einzelnen Rades eine eigene Antenne vorzusehen. Vielmehr genügt es, die zentrale Empfangs- und Auswerteschaltung mit einer einzigen Empfangsantenne zu verbinden, welche z.B. zentral unter dem Bodenblech des Fahrzeugs angeordnet sein kann. Der Empfangsteil der zentralen Empfangs- und Auswerteschaltung muß deshalb auch keineswegs ein Mehrkanalempfänger sein, sondern kann ein Einkanalempfänger sein. Der apparative Aufwand für die Radpositionserkennung wird durch die Erfindung deshalb wesentlich verringert.

In einer Ausführungsform der Erfindung kann das Bauteil, dessen Kennung durch Wechselwirkung zwischen dem Bauteil und der am benachbarten Rad vorgesehenen Antenne abgetastet wird, einen eigenen Sender enthalten, welcher die Kennung des Bauteils aussendet. Die Kennung wird von der am benachbarten Rad vorgesehenen Antenne empfangen, von einer Empfangsschaltung verarbeitet, dem am Rad vorgesehenen Sender zugeführt und den von ihm zu übertragenden, die Reifendruckmeßwerte enthaltenden Signalen als Kennung hinzugefügt. Die zentrale Empfangs- und Auswerteschaltung kann auf diese Weise eindeutig feststellen, an welcher Stelle des Fahrzeugs sich das Rad befindet, von welchem Reifendruckmeßwerte empfangen werden.

Der Sender in dem Bauteil kann durch ein mit der Fahrzeugbatterie verbundenes Kabel mit Gleichstrom versorgt werden. Die Kosten dafür, eine Stromversorgungsleitung vorzusehen, sind geringer als die Kosten dafür, eine HF-taugliche Antennenleitung vorzusehen. Besonders günstig ist es, den in dem Bauteil vorgesehenen eigenen Sender durch eine eigene Batterie mit Strom zu versorgen. Da die Kennung nur gelegentlich ausgesendet werden muß, genügt eine kleine Hochleistungsbatterie, beispielsweise auf Lithiumbasis, für eine Betriebszeit von 7 bis 10 Jahren.

Die Kennung des Bauteils wird vorzugsweise zyklisch gesendet; das kann durch eine in das Bauteil integrierte, freilaufende Triggerschaltung geschehen. Es ist aber auch möglich, den in dem Bauteil vorgesehenen eigenen Sender mit Hilfe des am Rad vorgesehenen Senders zu triggern, welcher seine Reifendruckmeßsignale zweckmäßigerweise ebenfalls nicht unterbrechungslos, sondern in Zeitabständen aussendet. Eine andere vorteilhafte Möglichkeit besteht darin, den im Bauteil vorgesehenen eigenen Sender zentral zu triggern, nämlich von der zentralen Empfangs- und Auswerteschaltung her, welche die Triggerung entweder drahtlos über die vorhandenen Antennen, gegebenenfalls über den am jeweiligen Rad vorgesehenen Sender als Relaisstation, oder aber leitungsgebunden an das jeweilige eine Kennung aufweisende Bauteil übermittelt, wenn dieses über eine Leitung mit Strom versorgt wird. Dadurch, daß der eigene Sender des Bauteils seine Kennung zu der am benachbarten Rad vorgesehenen Antenne funkt, kann zugleich der zu dieser Antenne gehörende Sender getriggert werden, so daß er den zuletzt ermittelten Druckmeßwert, ergänzt um die empfangene Kennung, an die zentrale Empfangs- und Auswerteschaltung funkt.

In einer anderen, bevorzugten Ausführungsform der Erfindung ist das dem jeweiligen Rad benachbarte, mit einer Kennung versehene Bauteil kein aktives, sondern ein passives Bauteil, welches für das elektromagnetische Feld, welches von dem am benachbarten Rad vorgesehenen Sender ausgestrahlt wird, in einem ausgewählten Frequenzbereich, welcher die Kennung der Stelle darstellt, an welcher sich das Rad befindet, eine Senke darstellt, welche in dem ausgewählten Frequenzbereich elektromagnetische Strahlung absorbiert und dem Sender auf diese Weise frequenz-selektiv Sendeleistung entzieht. Dieser frequenz-selektive Entzug von Sendeleistung wirkt auf die sendende Antenne zurück und ist beim Sender feststellbar. Erfindungsgemäß gehört deshalb zu dem am Rad vorgesehenen Sender eine Auswerte- und Steuerschaltung, welche diesen auf die Antenne zurückwirkenden frequenzselektiven Entzug der Sendeleistung in dem ausgewählten Frequenzbereich erkennt und den an die zentrale Empfangs- und Auswerteschaltung zu übermittelnden, die Druckmeßwerte enthaltenden Signalen einen Positionscode hinzufügt, welcher aus dem erkannten, ausgewählten Frequenzbereich abgeleitet wird, in welchem dem am Rad vorgesehenen Sender Leistung entzogen wurde. Der frequenzselektive Entzug von Sendeleistung kann dadurch bewirkt werden, daß das passive Bauteil einen gedämpften Schwingkreis enthält, dessen Eigenfrequenz in dem ausgewählten Frequenzbereich liegt.

Den verschiedenen Radpositionen des Fahrzeuges werden Bauteile mit unterschiedlichen absorbierenden Frequenzbereichen zugeordnet, so daß aus dem Frequenzbereich, in welchem HF-Energie absorbiert wird, eindeutig auf die Radposition geschlossen werden kann.

Es genügt, den Laufrädern, nicht aber einem mitgeführten Reserverad, jeweils ein Bauteil mit Kennung zuzuordnen. Druckmeßsignale, die von einem Reserverad stammen, können von Druckmeßsignalen, die von einem Laufrad kommen, dadurch unterschieden werden, daß diesen Signalen kein Positionscode hinzugefügt ist.

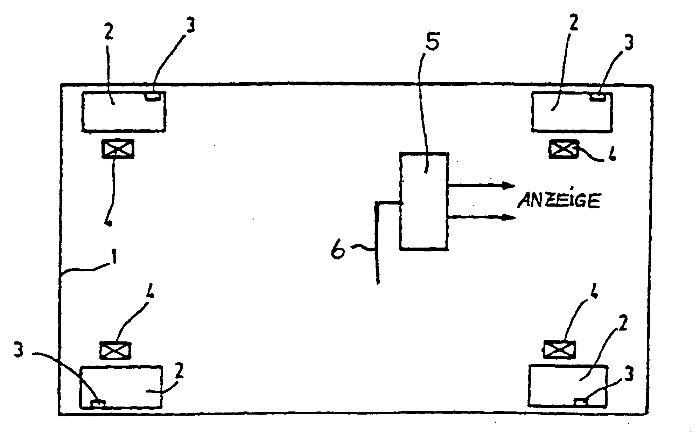

Die beigefügte Zeichnung zeigt schematisch im Grundriß das Chassis 1 eines Fahrzeugs mit vier Rädern 2, von denen jedes mit einer aus einem Druckmeßfühler, einer Auswerte- und Steuerschaltung, einem Sender, einer Batterie und einer Antenne bestehenden Anordnung 3 ausgerüstet ist. Jedem Rad 2 ist am Chassis, insbesondere an einer Wand des das Rad 2 umgebenden Radhauses oder Kotflügels, ein Bauteil 4 zugeordnet, welches mit einer die Position des Bauteils 4 kennzeichnenden Kennung versehen ist.

Von ihrem Druckmeßfühler aufgenommene Meßwerte des Reifendrucks werden von der in der Anordnung 3 vorhandenen Auswerte- und Steuerschaltung in ein Signal mit digitalem Datentelegramm umgewandelt und drahtlos an eine zentrale Empfangs- und Auswerteschaltung 5 übermittelt, welches eine Empfangsantenne 6 hat, welche die Signale von allen vier Rädern 2 empfängt. Damit die Empfangs- und Auswerteschaltung 5 erkennen kann, an welcher Stelle sich das jeweilige Rad 2 befindet, von welchem ein Signal kommt, welches ein digitales Datentelegramm enthält, wird dem Datentelegramm ein Positionscode hinzugefügt. Dieser Positionscode wird gewonnen, indem die dem jeweiligen Bauteil 4 mitgegebene Kennung durch drahtlose Wechselwirkung zwischen dem jeweiligen Bauteil 4 und der Anordnung 3 am benachbarten Rad 2 abgetastet wird und die Auswerte- und Steuerschaltung in der Anordnung 3 aus dem Ergebnis der Abtastung den Positionscode bildet. Das Abtasten der Kennung des jeweiligen Bauteils 4 kann - wie zuvor beschrieben - dadurch erfolgen, daß das Bauteil 4 einen Sender enthält, welcher die Kennung an die Anordnung 3 funkt, oder dadurch, daß das Bauteil 4 frequenzselektiv Sendeleistung des in der Anordnung 3 vorgesehenen Senders absorbiert und dadurch in einer für die jeweilige Radposition charakteristischen Weise auf den in der Anordnung 3 vorhandenen Sender zurückwirkt, woraus die der Anordnung 3 vorgesehene Auswerte- und Steuerschaltung ihrerseits den Positionscode ableitet, der dem auszusendenden Datentelegramm hinzugefügt wird.

Wenn die Bauteile 4 aktive Sender enthalten, können diese sich durch eine interne Zeitschaltung zyklisch selbst aktivieren und benötigen keine funktionale Verbindung zum Fahrzeug oder dessen zentraler Empfangs- und Auswerteschaltung 5. Es ist aber auch möglich, die in den aktiven Bauteilen 4 enthaltenen Sender durch digitale Signale zu aktivieren, welche von der zentralen Empfangs- und Auswerteschaltung 5 über dessen Antenne 6 drahtlos übermittelt werden. Das die Kennung des Bauteils 4 enthaltende Signal, welches daraufhin an die benachbarte Anordnung 3 übermittelt wird, wird von der darin vorgesehenen Auswerte- und Steuerschaltung erkannt und kann als Triggersignal verwendet werden, um den zuletzt erfaßten Druckmeßwert zusammen mit dem Positionscode an die zentrale Empfangs- und Auswerteschaltung 5 zu funken.

## Patentansprüche

1. Verfahren zum Erkennen, an welcher Stelle eines Fahrzeuges sich ein bestimmtes Rad (2) mit einem Luftreifen befindet, dessen Luftdruck durch eine Reifendruckkontrolleinrichtung überwacht wird, wobei
- das betreffende Rad (2) mit einer Anordnung (3), bestehend aus einer Auswerte- und Steuerschaltung einer Stromquelle, einem Druckmeßfühler einer Sendeantenne und einem Sender versehen ist, und
- dieser Sender die vom Druckmeßfühler ermittelten Reifendruckmeßwerte und eine Kennung des Rades (2), welche von den Kennungen der übrigen Räder des Fahrzeuges unterscheidbar ist, an eine mit einer Antenne (6) verbuncene zentrale Empfangs- und Auswerteschaltung (5) sendet,
**dadurch gekennzeichnet**, daß
- in der Nachbarschaft der Stellen am Fahrzeug, an denen sich Räder (2) befinden, ein Bauteil (4) angeordnet ist,
- dieses Bauteil (4) mit einer die betreffende Stelle am Fahrzeug charakterisierenden Kennung versehen ist,
- diese Kennung der betreffenden Stelle durch drahtlose Wechselwirkung zwischen dem Bauteil (4) und der Antenne der Anordnung (3) am zugehörigen Rad (2) übertragen wird und
- der Sender einen durch diese Kennung bestimmten Positionscode an die zentrale Empfangs- und Auswerteschaltung (5) sendet.

2. Verfahren nach Anspruch 1, **dadurch gekennzeichnet,** daß das Bauteil (4) einen eigenen Sender enthält, welcher die Kennung des Bauteils (4) aussendet.

3. Verfahren nach Anspruch 2, **dadurch gekennzeichnet,** daß das Bauteil (4) durch eine eigene Batterie mit Strom versorgt wird.

4. Verfahren nach Anspruch 2, **dadurch gekennzeichnet**, daß das Bauteil (4) über ein mit der Fahrzeugbatterie verbundenes Kabel mit Strom versorgt wird.

5. Verfahren nach einem der Ansprüche 2-4, **dadurch gekennzeichnet**, daß die Kennung des Bauteils (4) zyklisch gesendet wird.

6. Verfahren nach einem der Ansprüche 2-5, **dadurch gekennzeichnet**, daß das Sender der Kennung des Bauteils (4) durch Übertragen eines Steuersignals von der zentralen Empfangs- und Auswerteelektronik (5) ausgelöst wird.

7. Verfahren nach Anspruch 1, **dadurch gekennzeichnet**, daß dem am Rad (2) vorgesehenen Sender durch das in seiner Nachbarschaft vorgesehene passive Bauteil (4) in einem ausgewählten Frequenzbereich, welcher die Kennung der Stelle darstellt, an welcher sich das Rad (2) befindet, Sendeleistung entzogen wird,
und daß zum Sender eine Auswerte- und Steuerschaltung gehört, welche den Entzug der Sendeleistung in dem ausgewählten Frequenzbereich erkennt und den an die zentrale Empfangs- und Auswerteschaltung zu übermittelnden, die Druckmeßwerte enthaltenden Signalen einen Positionscode hinzufügt, welcher aus dem erkannten, ausgewählten Frequenzbereich abgeleitet wird, in welchem dem Sender Leistung entzogen wurde.

8. Verfahren nach Anspruch 7, **dadurch gekennzeichnet**, daß das passive Bauteil (4) einen gedämpften Schwingkreis enthält.

9. Verfahren nach Anspruch 1, **dadurch gekennzeichnet**, daß
- dem am Rad (2) vorgesehenen Sender durch das in seiner Nachbarschaft vorgesehene passive Bauteil (4) in einem ausgewählten Frequenzbereich, welcher die Kennung der betreffenden Stelle darstellt, an welcher sich das Rad (2) befindet, Sendeleistung entzogen wird, und
- die Auswerte- und Steuerschaltung der Anordnung (3) am Rad (2) den Entzug der Sendeleistung in dem ausgewählten Frequenzbereich erkennt, daraus den Positionscode ableitet und den Reifendruckmeßwerten hinzufügt.

## Claims

1. A method for detecting the point on a vehicle at which a specific wheel (2), having a pneumatic tire whose air pressure is monitored by a tire pressure monitoring device, is located, wherein
- the relevant wheel (2) is equipped with an arrangement (3) comprising an analysis and control circuit, a power source, a pressure sensor, a transmission antenna, and a transmitter; and
- said transmitter sends tire pressure readings obtained by the pressure sensor, and an identifier of the wheel (2) that is distinguishable from the identifiers of the other wheels of the vehicle, to a central receiving and analysis circuit (5) connected to an antenna (6),
**characterized in** that
- a component (4) is arranged in the vicinity of the points on the vehicle at which wheels (2) are located;
- said component (4) is equipped with an identifier characterizing the respective point on the vehicle;
- said identifier of the respective point is transmitted by wireless interaction between the component (4) and the antenna of the arrangement (3) on the associated wheel (2); and
- the transmitter sends to the central receiving and analysis circuit (5) a position code determined by said identifier.

2. The method as defined in Claim 1, **characterized in** that the component (4) contains a separate transmitter which sends out the identifier of the component (4).

3. The method as defined in Claim 2, **characterized in** that the component (4) is supplied with power by a separate battery.

4. The method as defined in Claim 2, **characterized in** that the component (4) is supplied with power via a cable connected to the vehicle battery.

5. The method as defined in any of Claims 2 through 4, **characterized in** that the identifier of the component (4) is sent cyclically.

6. The method as defined in any of Claims 2 through 5, **characterized in** that the transmission of the identifier of the component (4) is triggered by transfer of a control signal from the central electronic receiving and analysis system (5).

7. The method as defined in Claim 1, **characterized in** that transmitting power is extracted from the transmitter provided on the wheel (2), by the passive component (4) provided in its vicinity, in a selected frequency range which represents the identifier of the point at which the wheel (2) is located; and to the transmitter there is associated an analysis and control circuit which detects the extraction of transmitting power in the selected frequency range and adds to the signals to be transmitted to the central receiving and analysis circuit and containing the pressure readings a position code that is derived from the detected selected frequency range in which power was extracted from the transmitter.

8. The method as defined in Claim 7, **characterized in** that the passive component (4) contains a damped oscillation circuit.

9. The method as defined in Claim 1, **characterized in** that
- transmitting power is extracted from the transmitter provided on the wheel (2), by the passive component (4) provided in its vicinity, in a selected frequency range which represents the identifier of the relevant point at which the wheel (2) is located; and
- the analysis and control circuit of the arrangement (3) on the wheel (2) detects the extraction of transmitting power in the selected frequency range, derives the position code therefrom and adds it to the tire pressure readings.

## Revendications

1. Procédé pour détecter à quel endroit d'un véhicule se trouve une roue déterminée (2) comprenant un bandage pneumatique dont la pression atmosphérique est surveillée par un mécanisme de contrôle de la pression des pneumatiques, dans lequel
- la roue concernée (2) est munie d'un agencement (3) constitué par un circuit d'évaluation et de commande, par une source de courant, par un capteur de pression, par une antenne émettrice et par un émetteur, et
- cet émetteur envoie les valeurs de mesure de pression des pneumatiques déterminées par le capteur de pression et une identification de la roue (2) qui peut être distinguée des identifications des autres roues du véhicule, à un circuit de réception et d'évaluation central (5) relié à une antenne (6),
caractérisé en ce que
- à proximité des endroits du véhicule où se trouvent des roues (2), est disposé un composant (4),
- ce composant (4) est muni d'une identification caractérisant l'endroit correspondant sur le véhicule,
- cette identification de l'endroit correspondant est transmise via une interaction sans fil entre le composant (4) et l'antenne de l'agencement (3) à la roue correspondante (2), et
- l'émetteur envoie un code de position déterminé par cette identification au circuit de réception et d'évaluation central (5).

2. Procédé selon la revendication 1, caractérisé en ce que le composant (4) contient son propre émetteur qui émet l'identification du composant (4).

3. Procédé selon la revendication 2, caractérisé en ce que le composant (4) est alimenté avec du courant via une batterie qui lui est propre.

4. Procédé selon la revendication 2, caractérisé en ce que le composant (4) est alimenté avec du courant via un câble relié à la batterie du véhicule.

5. Procédé selon l'une quelconque des revendications 2 à 4, caractérisé en ce que l'identification du composant (4) est envoyée de manière cyclique.

6. Procédé selon l'une quelconque des revendications 2 à 5, caractérisé en ce que l'émetteur déclenche l'identification du composant (4) par transmission d'un signal de commande depuis le circuit électronique de réception et d'évaluation central (5).

7. Procédé selon la revendication 1, caractérisé en ce qu'on prélève une puissance d'émission à partir de l'émetteur prévu sur la roue (2) via le composant passif (4) prévu à sa proximité, dans une gamme de fréquences sélectionnées qui représentent l'identification de l'endroit auquel se trouve la roue (2),
et en ce qu'un circuit d'évaluation et de commande fait partie de l'émetteur, qui reconnaît le prélèvement de la puissance d'émission dans la gamme de fréquences sélectionnées et ajoute aux signaux contenant les valeurs de mesure de pression, à transmettre au circuit de réception et d'évaluation central, un code de position qui dérive de la gamme de fréquences sélectionnées détectées dans laquelle de la puissance a été prélevée à partir de l'émetteur.

8. Procédé selon la revendication 7, caractérisé en ce que le composant passif (4) contient un circuit oscillant amorti.

9. Procédé selon la revendication 1, caractérisé en ce que
- on prélève une puissance d'émission à partir de l'émetteur prévu sur la roue (2) via le composant passif (4) prévu à sa proximité, dans une gamme de fréquences sélectionnées qui représentent l'identification de l'endroit correspondant auquel se trouve la roue (2), et
- le circuit d'évaluation et de commande de l'agencement (3) sur la roue (2) détecte le prélèvement de la puissance d'émission dans la gamme de fréquences sélectionnées, en dérive le code de position et l'ajoute aux valeurs de mesure de pression des pneumatiques.
